# EUROPÄISCHE PATENTSCHRIFT

(11) **EP 0 786 395 B1**
(45) Veröffentlichungstag und Bekanntmachung des Hinweises auf die Patenterteilung: **25.07.2001**
(21) Anmeldenummer: 97101010.3
(22) Anmeldetag: 23.01.1997
(51) Int. Cl.: B62D 33/06, B60R 21/13

(54) **Gabelstapler**
Forklift truck
Chariot élévateur à fourche

(30) Priorität: 26.01.1996 DE 19602797
(43) Veröffentlichungstag der Anmeldung: 30.07.1997
(73) Patentinhaber: Crown Gabelstapler GmbH, D-81677 München (DE)
(72) Erfinder: Gallagher, Mike, Greenville, OH 45331 (US)
(74) Vertreter: Sandmann, Joachim, Dr.

(56) Entgegenhaltungen:
- DE-A- 1 680 681
- DE-U- 9 407 552
- FR-A- 2 297 762
- GB-A- 1 170 240
- US-A- 2 969 255

## Beschreibung

Die Erfindung bezieht sich auf einen Gabelstapler mit einer offenen Fahrerkabine, die von einem Schutzdach überdeckt und zwischen zwei seitlichen vorderen Dachstützen und zwei seitlichen hinteren Dachstützen gebildet ist, wobei jede vordere Dachstütze zwischen ihren Enden einen gekrümmten Abschnitt aufweist, mit ihrem oberen Ende hinter ihrem unteren Ende angeordnet ist und eine seitliche Einstiegsöffnung für den Fahrer begrenzt, deren vordere Umgrenzungskante unterhalb der Sitzfläche des Fahrersitzes bogenförmig gekrümmt nach unten und hinten verläuft.

Bei Gabelstaplern besteht im Hinblick auf die geforderte Wendigkeit und das Agieren auf engem Raum das Bestreben nach kompakter Bauweise. Das gilt in besonderem Maße für die Abmessungen in Längsrichtung des Fahrzeugs. Das wirkt sich auch auf die räumlichen Verhältnisse hinsichtlich der Fahrerkabine und der Einstiegsöffnung aus, die linksseitig und/oder rechtsseitig vorgesehen sein kann. Im allgemeinen kann der Fahrer zwar eine unbehinderte Sitzstellung hinter dem Lenkrad einnehmen, der Ein- und Ausstieg ist jedoch beengt, weil der Freiraum vor dem Fahrersitz im Interesse einer kompakten Bauweise eingeschränkt ist.

Der eingangs beschriebene und aus DE 94 07 552 U1 bekannte gattungsgemäße Gabelstapler erleichtert den Einstieg dadurch, daß die Einstiegsöffnung sich in Höhe des Fahrersitzes bzw. des Kniebereichs nach vorne vorwölbt. Diese zweckmäßige Form der Einstiegsöffnung wird mit einer vorderen Dachstütze von rechteckigem Hohlprofil erreicht, die von ihrem etwa in Kniehöhe des sitzenden Fahrers befindlichen unteren Ende ausgehend mit einer leichten Krümmung nach oben und hinten verläuft und sich auf einem trapezförmigen vorderen Seitenwandteil abstützt, das die Einstiegsöffnung in ihrem unteren Bereich mit einer Hinterkante begrenzt, die ausgehend von ihrem oberen Ende im Kniebereich des Fahrers leicht gekrümmt nach unten und hinten verläuft. Der Punkt größter Vorwölbung der Einstiegsöffnung liegt also am Übergang zwischen dem trapezförmigen Seitenwandteil und der vorderen Dachstütze im Kniebereich nahe unterhalb der Sitzfläche des Fahrersitzes.

Die bekannte Ausbildung mit einer gekrümmt verlaufenden vorderen Dachstütze von rechteckigem Querschnittsprofil und mit einem separaten Wandteil zur Begrenzung der Einstiegsöffnung an ihrer Vorderseite ist jedoch vergleichsweise aufwendig. Auch führt der Einsatz des separaten trapezförmigen Wandteils von vergleichsweise großer Breite zu einer eher plumpen als ansprechenden Gestaltung.

Aus DE 23 19 835 C2 ist ein Gabelstapler mit zwei Seitenbügeln aus gebogenem Rundrohr von etwa umgekehrter U-Form bekannt, deren herabragende Schenkel jeweils eine vordere Dachstütze und eine hintere Dachstütze bilden, zwischen denen jeweils eine Einstiegsöffnung ausgebildet ist. Diese von oben nach unten divergierenden Schenkel oder Stützen gehen zwar an ihrem oberen Ende mit einer Krümmung in den dachseitigen Mittelabschnitt des Seitenbügels über, erstrecken sich aber ansonsten gerade bis zu ihrem unteren Ende und können daher nicht zu einem bequemen Einstieg bei gleichzeitig kompakter Ausbildung beitragen.

Der Erfindung liegt die Aufgabe zugrunde, den eingangs beschriebenen bekannten Gabelstapler unter Beibehaltung eines erleichterten Ein- und Ausstiegs speziell im Schulter- bis Kniebereich einfacher und kompakter zu gestalten.

Diese Aufgabe wird erfindungsgemäß dadurch gelöst, daß jede vordere Dachstütze sich nach unten zumindest bis zum Boden der Fahrerkabine erstreckt und aus einem gebogenen Rundrohr gefertigt ist, dessen unterer Bereich nach hinten zurückgebogen ist, so daß die Dachstütze sich nach vorne vorwölbt und einen vor ihrem unteren Ende und unterhalb der Sitzfläche des Fahrersitzes befindlichen Punkt größter Vorwölbung aufweist.

Zweckmäßige Ausgestaltungen und Weiterbildungen dieser Erfindung ergeben sich aus den Unteransprüchen.

Durch die gekrümmten, sich über ihr unteres Ende hinaus vorwölbenden, also von unten zunächst nach vorne geneigt aufsteigenden vorderen Dachstützen vergrößern sich die Einstiegsöffnungen, ohne daß dazu die Anschlußpunkte der vorderen Dachstützen an die Fahrzeugkarosserie bzw. an die Dachkonstruktion weiter nach vorne verlegt werden müssen. Ferner bietet sich die Möglichkeit, den Verlauf der Krümmung und das Ausmaß der Vorwölbung den Erfordernissen anzupassen, so daß sich sowohl ein bequemer Ein- und Ausstieg wie auch eine stabile Dachabstützung erreichen lassen. Die vorgesehene Krümmung der als Dachstützen dienenden Rundrohre kann über deren ganze Länge und im vorgesehenen Ausmaß problemlos und ohne großen Aufwand durchgeführt werden. Das sich einstückig über die Höhe der Einstiegsöffnung erstreckende Rundrohr mit einem Punkt größter Vorwölbung zwischen seinen Enden führt nicht nur zu einem ansprechenden Design und zu einer zweckmäßig geformten Einstiegsöffnung, es erleichtert den Einstieg auch dadurch, daß das Rundrohr in der gewünschten Höhe als Handgriff zur Erleichterung des Ein- und Ausstiegs dient, wobei die Krümmung bzw. Vorwölbung eine günstige Griffposition ermöglicht, was gleichfalls zu einer Verbesserung der Ein- und Ausstiegsverhältnisse beiträgt.

Ein Ausführungsbeispiel der Erfindung wird nachfolgend anhand einer schematischen Zeichnung näher erläutert.

Es zeigen:
- Figur 1: einen Gabelstapler mit abgebrochen dargestellten Gabelzinken in Seitenansicht;
- Figur 2: in einer gegenüber Figur 1 vergrößerten Darstellung einen Ausschnitt mit den für die räumlichen Ein- und Ausstiegsverhältnisse maßgeblichen Gabelstaplerteilen; und
- Figur 3: eine Draufsicht zu Figur 2.

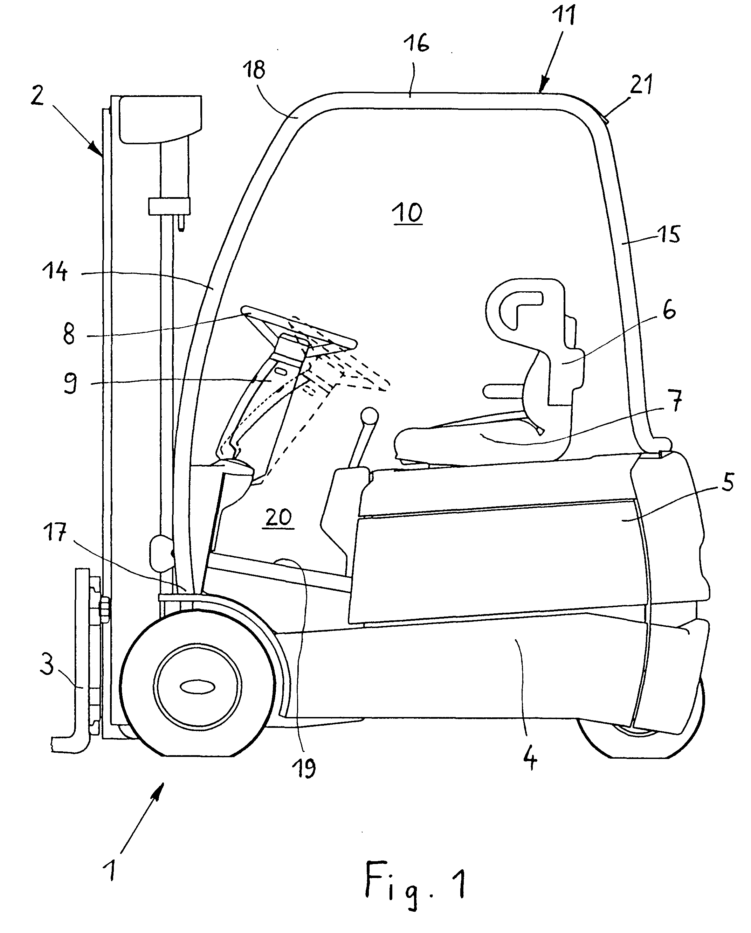

Gemäß Figur 1 ist der Gabelstapler 1 in bekannter Weise als vierrädriges Fahrzeug ausgebildet, das an seiner Vorderseite eine Hubeinrichtung 2 mit einer Traggabel 3 aufweist, deren nach vorne vorragenden Zinken nur mit ihren hinteren Enden angedeutet sind. Auf dem Fahrzeugrahmen bzw. der Karosserie 4 sind die in einem Gehäuse 5 untergebrachten Antriebseinrichtungen für den Fahrantrieb und die Betätigung der Hubeinrichtung 2 angeordnet. Auf dem Gehäuse 5 befindet sich der Fahrersitz 6 mit der Sitzfläche 7 hinter dem Lenkrad 8. Dieses kann wie in Figur 1 angedeutet zusammen mit der Lenksäule 9 zwischen einer hochgeschwenkten Stellung für den erleichterten Ein- und Ausstieg des Fahrers und einer niedergeschwenkten Fahrstellung (in Figur 1 gestrichelt angedeutet) verlagert werden, in der das Lenkrad 8 eine für den sitzenden Fahrer geeignete Stellung einnimmt.

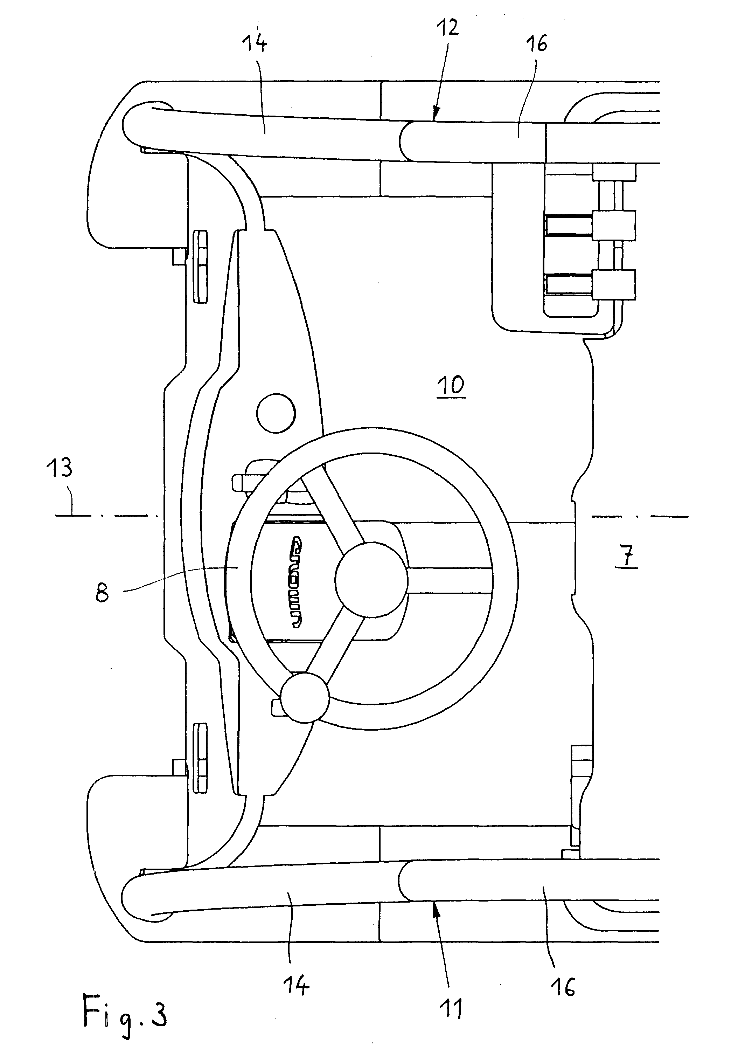

Für den Fahrer ist eine allseitig offene Fahrerkabine 10 zwischen zwei etwa umgekehrt U-förmigen Seitenbügeln 11, 12 vorgesehen, die symmetrisch zur vertikalen Längsmittelebene 13 (siehe Figur 3) ausgebildet und angeordnet sind. Jeder Seitenbügel 11 bzw. 12 erstreckt sich annähernd in einer zur Längsmittelebene 13 parallelen Vertikalebene.

Die Seitenbügel 11 und 12 sind aus einem gebogenen Rundrohr von beispielsweise 48 mm Außendurchmesser einstückig hergestellt, wobei drei mit Rundbögen ineinander übergehende Abschnitte zu unterscheiden sind, nämlich eine vom vorderen Schenkel gebildete vordere Dachstütze 14, eine vom hinteren Schenkel gebildete hintere Dachstütze 15 und ein vom oberen Mittelabschnitt gebildeter Dachholm 16. Dieser erstreckt sich im wesentlichen waagerecht, während die hintere Dachstütze 14 gegenüber der senkrechten leicht nach oben und vorne geneigt ist sowie mit einer geringen Krümmung ausgeführt sein kann, wie es Figur 1 zeigt.

Von besonderer Bedeutung für die Erfindung ist die vordere Dachstütze 14. Diese weist einen sich nach vorne vorwölbenden Krümmungsabschnitt auf, der vergleichsweise stark gekrümmt ist. Beim dargestellten Gabelstapler 1 erstreckt sich der Krümmungsabschnitt über die ganze Höhe der vorderen Dachstütze 14 von deren unterem Ende 17 bis zu deren oberem Ende 18. Dabei verläuft die Krümmung längs eines Kreisbogens, der beim dargestellten Ausführungsbeispiel einen Radius von 2,15 m aufweist. Der zugehörige Krümmungsmittelpunkt liegt oberhalb des unteren Endes 17 der vorderen Dachstütze 14 in einer Höhenlage zwischen dem Fußboden 19 der Fahrerkabine 10 und der Sitzfläche 7 des Fahrersitzes 6. Dementsprechend ragt das untere Ende 17 der vorderen Dachstütze 14 von der Karosserie 4 ausgehend sogar geringfügig nach vorne geneigt auf. Der vorderste Punkt der vorderen Dachstütze 14 befindet sich in entsprechender Höhe zwischen dem Fußboden 19 und der Stitzfläche 7.

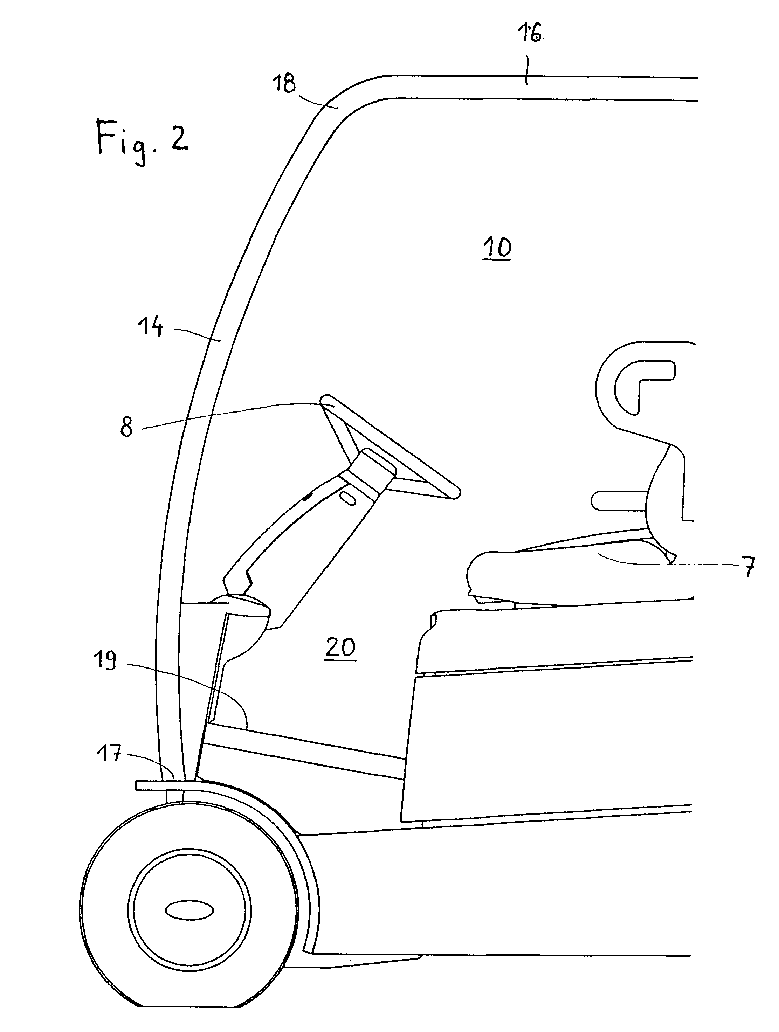

Aus den Figuren 1 und 2 ist ersichtlich, daß die sich nach vorne vorwölbende vordere Dachstütze 14 auf jeder Seite des Gabelstaplers 1 eine vergleichsweise breite und dementsprechend bequeme Einstiegsöffnung 20 für den Fahrer schafft. Dabei dient die vordere Dachstütze 14 zugleich als Handgriff beim Aufsteigen in die bzw. Absteigen aus der Fahrerkabine 10. Der Vorteil des Breitengewinns der Einstiegsöffnung 20 durch die sich vorwölbende vordere Dachstütze 14 erfordert keine vergrößerten Gesamtabmessungen des Gabelstaplers 1. Außerdem wirkt sich der Raumgewinn bis zum oberen Ende 18 der vorderen Dachstütze 14 aus. Dementsprechend führt die sich vorwölbende vordere Dachstütze 14 nicht nur zu einer erhöhten Knie- und Hüftfreiheit sondern auch zu einer verbesserten Schulterfreiheit.

Die beiden Dachholme 16 der Seitenbügel 11 und 12 dienen der Anbringung eines sich quer zwischen den beiden Dachholmen erstreckenden Schutzdachs 21 und können bereits selbst als Teil der Dachkonstruktion angesehen werden.

Ergänzend sei darauf hingewiesen, daß es nicht erforderlich ist, die vorderen Dachstützen 14 über ihre ganze Länge bzw. Höhe gekrümmt auszuführen. Ebenso ist es nicht erforderlich, eine kreisbogenförmige Krümmung vorzusehen. Vielmehr kann die vordere Dachstütze 14 in nicht dargestellter Weise aus aneinander anschließenden gekrümmten und geraden Abschnitten zusammengesetzt sein, wobei die Lage der Krümmungsabschnitte und das Ausmaß der Krümmung so ausgeführt sein können, daß speziell an denjenigen Stellen, an denen sich bisher der Ein- und Ausstieg als störend eingeengt erwiesen hat, eine vergrößerte Freiheit hervorgerufen wird.

## Patentansprüche

1. Gabelstapler mit einer offenen Fahrerkabine (10), die von einem Schutzdach (21) überdeckt und zwischen zwei seitlichen vorderen Dachstützen (14) und zwei seitlichen hinteren Dachstützen (15) gebildet ist, wobei jede vordere Dachstütze (14) zwischen ihren Enden (17, 18) einen gekrümmten Abschnitt aufweist, mit ihrem oberen Ende (18) hinter ihrem unteren Ende (17) angeordnet ist und eine seitliche Einstiegsöffnung (20) für den Fahrer begrenzt, deren vordere Umgrenzungskante unterhalb der Sitzfläche (7) des Fahrersitzes (6) bogenförmig gekrümmt nach unten und hinten verläuft, **dadurch gekennzeichnet,** daß jede vordere Dachstütze (14) sich nach unten zumindest bis zum Boden (19) der Fahrerkabine (10) erstreckt und aus einem gebogenen Rundrohr gefertigt ist, dessen unterer Bereich nach hinten zurückgebogen ist, so daß die Dachstütze (14) sich nach vorne vorwölbt und einen vor ihrem unteren Ende (17) und unterhalb der Sitzfläche (7) des Fahrersitzes (6) befindlichen Punkt größter Vorwölbung aufweist.

2. Gabelstapler nach Anspruch 1, **dadurch gekennzeichnet,** daß die Krümmung der vorderen Dachstützen sich über deren ganze Höhe erstreckt.

3. Gabelstapler nach Anspruch 1 oder 2, **dadurch gekennzeichnet,** daß die vorderen Dachstützen (14) kreisbogenförmig gekrümmt sind.

4. Gabelstapler nach Anspruch 3, **dadurch gekennzeichnet,** daß der Krümmungsradius zwischen 2 m und 2,5 m, insbesondere etwa 2,15 m, beträgt.

5. Gabelstapler nach einem der Ansprüche 1 bis 4, **dadurch gekennzeichnet,** daß der Krümmungsmittelpunkt jeder vorderen Dachstütze (14) sich in einer Höhe zwischen dem unteren Ende (17) der vorderen Dachstütze (14) und der Sitzfläche (7) des Fahrersitzes (6) befindet.

6. Gabelstapler nach einem der Ansprüche 1 bis 5, **dadurch gekennzeichnet,** daß die vorderen Dachstützen (14) einen Durchmesser zwischen 40 und 60 mm, insbesondere von etwa 50 mm, aufweisen.

7. Gabelstapler nach einem der Ansprüche 1 bis 6, **dadurch gekennzeichnet,** daß jede vordere Dachstütze (14) mit der hinteren Dachstütze (15) auf derselben Fahrzeugseite durch einen im wesentlichen längsverlaufenden Dachholm (16) zu einem etwa umgekehrt U-förmigen Seitenbügel (11, 12) verbunden ist.

8. Gabelstapler nach Anspruch 7, **dadurch gekennzeichnet,** daß jeder Seitenbügel (11, 12) mit den beiden Dachstützen (14, 15) als Schenkeln und dem Dachholm (16) als verbindendem Mittelabschnitt einstückig aus einem entsprechend gebogenen Rohr hergestellt ist.

9. Gabelstapler nach einem der Ansprüche 1 bis 8, **dadurch gekennzeichnet,** daß die auf gegenüberliegenden Fahrzeugseiten vorgesehenen, jeweils eine vordere Dachstütze (14) umfassenden Tragkonstruktionen für das Schutzdach (21) symmetrisch zur vertikalen Längsmittelebene (13) des Fahrzeugs ausgebildet und angeordnet sind.

## Claims

1. Forklift truck with an open driver's cab (10), which is covered by a protective roof (21) and is formed between two lateral front roof supports (14) and two lateral rear roof supports (15), each front roof support (14) having between its ends (17, 18) a curved section, being arranged with its upper end (18) behind its lower end (17) and delimiting a lateral entry opening (20) for the driver, the front boundary edge of which extends downwards and rearwards in an arc below the seating surface (7) of the driver's seat (6), characterized in that each front roof support (14) extends downwards at least as far as the floor (19) of the driver's cab (10) and is manufactured from a bent round tube, the lower part of which is bent back rearwards, with the result that the roof support (14) arches forwards and has a point of maximum forward curvature before its lower end (17) and below the seating surface (7) of the driver's seat (6).

2. Forklift truck according to Claim 1, characterized in that the curvature of the front roof supports extends over their entire height.

3. Forklift truck according to Claim 1 or 2, characterized in that the front roof supports (14) are curved in a circular arc.

4. Forklift truck according to Claim 3, characterized in that the radius of curvature is between 2 m and 2.5 m, in particular about 2.15 m.

5. Forklift truck according to one of Claims 1 to 4, characterized in that the centre of curvature of each front roof support (14) is at a height between the lower end (17) of the front roof support (14) and the seating surface (7) of the driver's seat (6).

6. Forklift truck according to one of Claims 1 to 5, characterized in that the front roof supports (14) have a diameter of between 40 and 60 mm, in particular of about 50 mm.

7. Forklift truck according to one of Claims 1 to 6, characterized in that each front roof support (14) is connected to the rear roof support (15) on the same side of the vehicle by an essentially longitudinally extending roof spar (16) to give a side hoop (11, 12) approximately in the form of an inverted U.

8. Forklift truck according to Claim 7, characterized in that each side hoop (11, 12) is produced in one piece from a correspondingly bent tube, with the two roof supports (14, 15) as arms and the roof spar (16) as the connecting central section.

9. Forklift truck according to one of Claims 1 to 8, characterized in that the supporting structures for the protective roof (21), which are provided on opposite sides of the vehicle and each comprise a front roof support (14), are constructed and arranged symmetrically to the vertical longitudinal centre plane (13) of the vehicle.

## Revendications

1. Chariot élévateur à fourche comprenant une cabine de conduite ouverte (10) qui est recouverte d'un toit de protection (21) et est formée entre deux supports de toit avant (14) latéraux et deux supports de toit arrière (15) latéraux, chaque support de toit avant (14) présentant entre ses extrémités (17, 18) une section courbe, étant disposé avec son extrémité supérieure (18) en arrière de son extrémité inférieure (17) et délimitant une ouverture d'entrée (20) pour le conducteur, dont l'arête de délimitation avant s'étend vers le bas et vers l'arrière suivant une courbe en forme d'arc sous la surface de siège (7) du siège (6) du conducteur, **caractérisé en ce que** chaque support de toit avant (14) s'étend vers le bas au moins jusqu'au fond (19) de la cabine de conduite (10) et est fabriqué en un tube rond cintré, dont la région inférieure est recourbée vers l'arrière de sorte que le support de toit (14) se bombe vers l'avant et présente un point de plus forte courbure devant son extrémité inférieure (17) et sous la surface de siège (7) du siège (6) du conducteur.

2. Chariot élévateur à fourche selon la revendication 1, **caractérisé en ce que** la courbure des supports de toit avant s'étend sur toute leur hauteur.

3. Chariot élévateur à fourche selon la revendication 1 ou 2, **caractérisé en ce que** les supports de toit avant (14) sont courbés suivant un arc de cercle.

4. Chariot élévateur à fourche selon la revendication 3, **caractérisé en ce que** le rayon de courbure est compris entre 2 m et 2,5 m, en particulier est d'environ 2,15 m.

5. Chariot élévateur à fourche selon l'une quelconque des revendications 1 à 4, **caractérisé en ce que** le centre de courbure de chaque support de toit avant (14) se trouve à une hauteur comprise entre l'extrémité inférieure (17) du support de toit avant (14) et la surface de siège (7) du siège (6) du conducteur.

6. Chariot élévateur à fourche selon l'une quelconque des revendications 1 à 5, **caractérisé en ce que** les supports de toit avant (14) présentent un diamètre compris entre 40 et 60 mm, en particulier d'environ 50 mm.

7. Chariot élévateur à fourche selon l'une quelconque des revendications 1 à 6, **caractérisé en ce que** chaque support de toit avant 914) est connecté au support de toit arrière (15) du même côté du véhicule, par le biais d'un longeron de toit (16) s'étendant essentiellement longitudinalement, pour former un arceau latéral (11, 12) approximativement en forme de U inversé.

8. Chariot élévateur à fourche selon la revendication 7, **caractérisé en ce que** chaque arceau latéral (11, 12) est fabriqué d'une pièce avec les deux supports de toit (14, 15) servant de branches et avec le longeron de toit (16) de portion centrale de connexion, à partir d'un tube cintré de manière correspondante.

9. Chariot élévateur à fourche selon l'une quelconque des revendications 1 à 8, **caractérisé en ce que** les constructions porteuses pour le toit de protection (21), prévues sur des côtés opposés du véhicule et comprenant chacune un support de toit avant (14), sont formées et disposées de façon symétrique par rapport au plan médian longitudinal vertical (13) du véhicule.
